# EUROPEAN PATENT APPLICATION

(11) **EP 2 550 880 A2**
(43) Date of publication of application: **30.01.2013**
(21) Application number: 11195109.1
(22) Date of filing: 22.12.2011
(51) Int. Cl.: A41D 19/00

(54) **Finger cover for operating a capacitive touch panel and glove comprising the same**

(30) Priority: 27.07.2011 TW 100126489
(71) Applicant: Tex-Ray Industrial Co., Ltd., Taipei City (TW)
(72) Inventor: Lee, James, Taipei City (TW); Huang, Hong-Hsu, Taipei City (TW); Kang, Chi-Shu, Taipei City (TW); Peng, Jung-Hsiang, Taipei City (TW)
(74) Representative: von Kreisler Selting Werner

(57) **Abstract**

A finger cover for (120) operating a capacitive touch panel and a glove (100) comprising the same are provided. The finger cover (120) comprises a finger pulp portion (121) and a finger back portion (122) opposite the finger pulp portion (121). The finger cover (120) is woven of a conductive yarn (2) and is separably combined with a body (110) to form the glove (100). A user who wears the glove (100) is able to be coupled with the capacitive touch panel through the finger cover (120) for control via touch.

## Description

This application claims the benefit of priority based on Taiwan Patent Application No. 100126489 filed on July 27, 2011, which is hereby incorporated by reference in its entirety.

### CROSS-REFERENCES TO RELATED APPLICATIONS

Not applicable.

### BACKGROUND OF THE INVENTION

### Field of the Invention

The present invention relates to a finger cover and a glove comprising the same, and more particularly, to a finger cover capable of being coupled with and adapted to operate a capacitive touch panel and a glove comprising the same.

### Descriptions of the Related Art

Touch panels are devices attached onto the surface of liquid crystal screens. When a finger or a touch pen slightly touches the touch panel disposed on the liquid crystal screen, the position of the pointer can be controlled through the senses to input instructions. Compared to conventional personal computers (PCs), touch panels eliminate the need of a peripheral device such as a keyboard or a mouse to input instructions, thereby saving space. Furthermore, the more intuitive operational mode thereof has gained wide popularity from users. Therefore, over recent years, touch panels have found wide applications in various fields, for example, in portable electronic products, automatic teller machines (ATMs), industrial control systems and information guiding and query machines.

Touch panels may generally be classified into the following categories depending on their sensing principles: capacitive, resistive, electromagnetic and infrared. Touch panels that operate on different principles have different power consumption levels and different touch sensitivities, resulting in respective advantages and disadvantages in application. Amongst the different touch panels, even though capacitive touch panels consume a high amount of power, they require only a slight touch to the panel body for operation; as a result, capacitive touch panels have become the most commonly used touch panels.

Capacitive touch panels perform coordinate positioning by relying on the induced current generated when the user's body is electrostatically coupled with an electric field of the touch panel, thereby resulting in a very quick reaction speed. Meanwhile, the same control effect may also be achieved when other objects capable of being electrostatically coupled with the capacitive touch panel is used to touch the capacitive touch panel. Hence, it can be readily appreciated that if an object that is unable to be electrostatically coupled with the capacitive touch panel is used by the user to touch the capacitive touch panel, no response will be obtained. In other words, because conventional gloves are unable to be electrostatically coupled with the capacitive touch panel, a user who wears such a glove in cold weather or for some other reason will be unable to give any instruction to the capacitive touch panel.

In view of this, it is important to provide a finger cover capable of being electrostatically coupled with a capacitive touch panel and a glove comprising the finger cover so that a user who wears this finger cover or the glove can still operate the capacitive touch panel.

### SUMMARY OF THE INVENTION

An objective of the present invention is to provide a finger cover that can be worn by a user on a finger thereof so that the finger is coupled with a capacitive touch panel to operate the capacitive touch panel.

Another objective of the present invention is to provide a glove which, when coming into contact with the capacitive touch panel, allows the finger to be electrostatically coupled with the capacitive touch panel so that the user can operate the capacitive touch panel.

To achieve the aforesaid objective, the finger cover of the present invention comprises a finger pulp portion and a finger back portion opposite the finger pulp portion. The finger cover is woven of a conductive yarn, and is separably combined with a body to form a glove. A user who wears the glove on the hand thereof is able to be coupled with the capacitive touch panel through the finger cover.

The embodiments of the present invention are reflected in the independent claims.

Preferred embodiments are mentioned in the dependent claims.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

**FIG. 1A** is a schematic front view of a first embodiment of a glove according to the present invention;
**FIG 1B** is a schematic rear view of the first embodiment of the glove according to the present invention;
**FIG. 2** is a schematic view of a second embodiment of the glove according to the present invention;
**FIG 3** is a schematic enlarged view of the finger cover of the first embodiment according to the present invention; and
**FIG 4** is a schematic partially enlarged view of a conductive yarn of the glove according to the present invention.

### DESCRIPTION OF THE PREFERRED EMBODIMENT

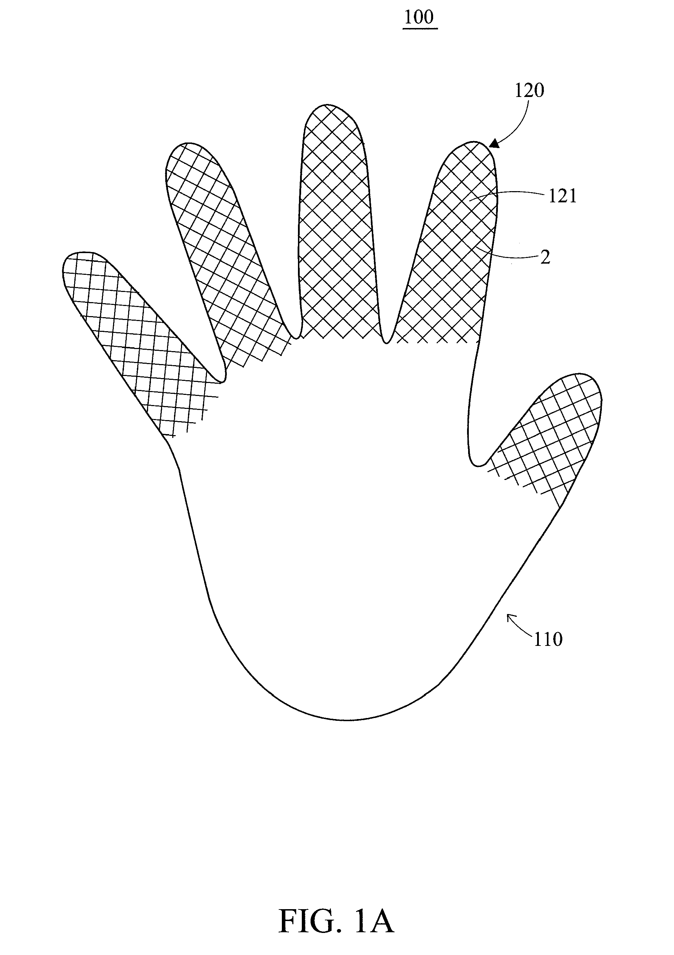

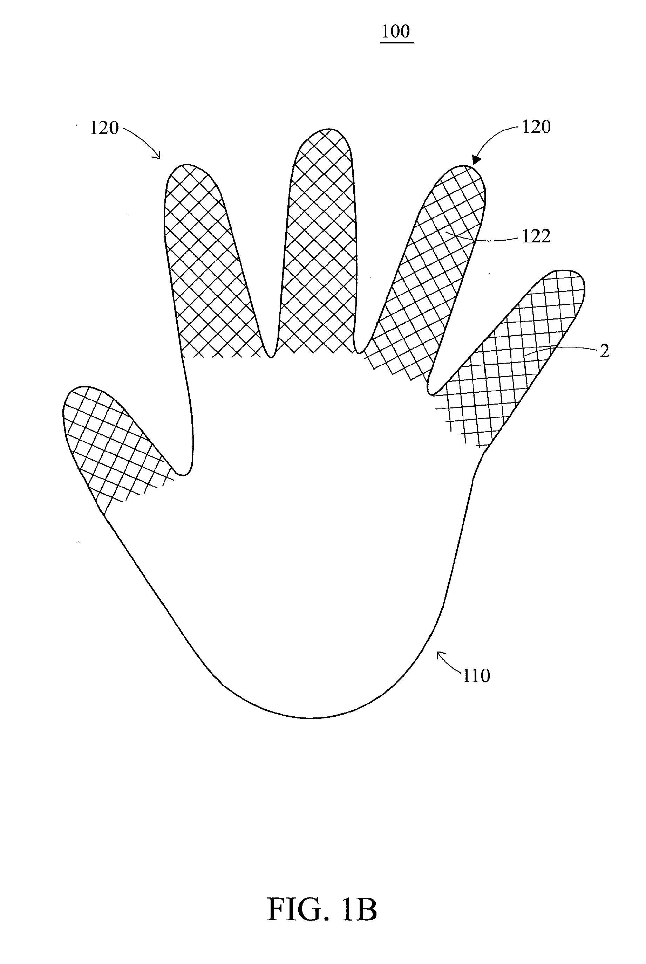

With reference to **FIGS. 1A** and **1B****,** a glove **100** that is used for operating a capacitive touch panel (not shown) according to a first embodiment of the present invention comprises a body **110** and at least one finger cover **120.** In this embodiment, the finger cover **120** preferably comprises five finger covers **120,** each of which comprises a finger pulp portion **121** and a finger back portion **122** opposite the finger pulp portion **121.** The five finger covers **120** are separably combined with the body **110.** It shall be appreciated that for the purpose of distinction in this invention, the finger pulp portion **121** refers to the portion facing towards an inner side of the user's palm and the finger back portion **122** refers to the portion facing towards an outer side of the palm.

As shown in **FIG 1A****,** the finger cover **120** is woven of a conductive yarn **2,** and the body **110** is woven of a fabric different from the conductive yarn **2.** Hence, when the user wears the glove **100** on a hand thereof, the five finger covers **120** are adapted to be worn on the user's fingers respectively so that the user is able to be coupled with the capacitive touch panel through the five finger covers **120** woven of the conductive yarn **2.**

It shall be appreciated that in the first embodiment as shown in **FIGs. 1A** and **1B****,** both the finger pulp portion **121** and the finger back portion **122** of each finger cover **120** are able to be electrostatically coupled with the capacitive touch panel while the body **110** is not, because only the five finger covers **120** of the glove **100** are woven of the conductive yarn **2** while the body **110** is still woven of a conventional material different from the conductive yarn **2,**

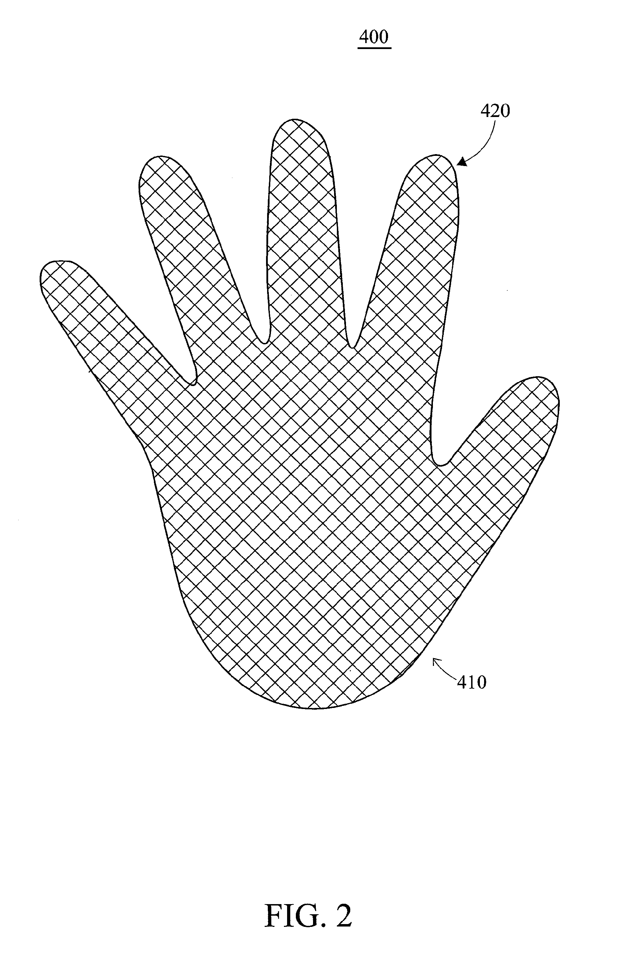

**FIG. 2** shows a second embodiment of the present invention. As shown, the glove **400** comprises a body **410** and at least one finger cover **420.** The finger cover **420** preferably comprises five finger covers **420.** Similar to the finger covers **120** of the first embodiment, the finger cover **420** of the second embodiment may each comprise a finger pulp portion (not shown) and a finger back portion (not shown). Because the functionalities of the finger cover **420** of the second embodiment are all the same as the finger covers **120** of the first embodiment, no further description will be made thereon again. The second embodiment differs from the first embodiment in that aside from finger cover **420** of the glove **400** being woven of the conductive yarn **2,** the body **410** is also woven of the conductive yarn **2,** and the at finger cover **420** may be further integrally formed with the body **410** to form the glove **400.** Therefore, any portion of the glove **400** disclosed in the second embodiment can be electrostatically coupled with the capacitive touch panel so that the operation of the capacitive touch panel can be accomplished in response to the user's touch.

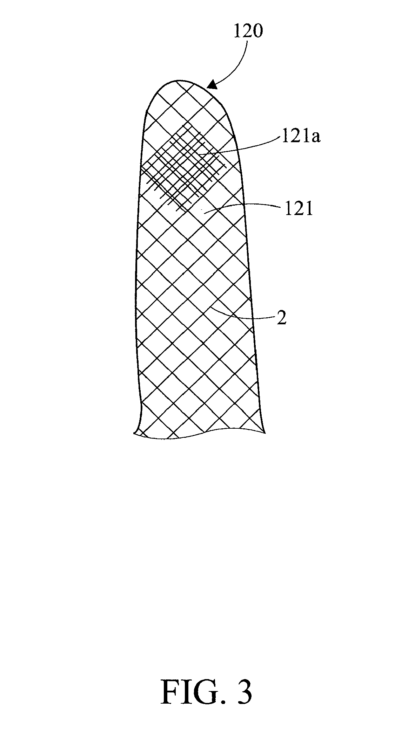

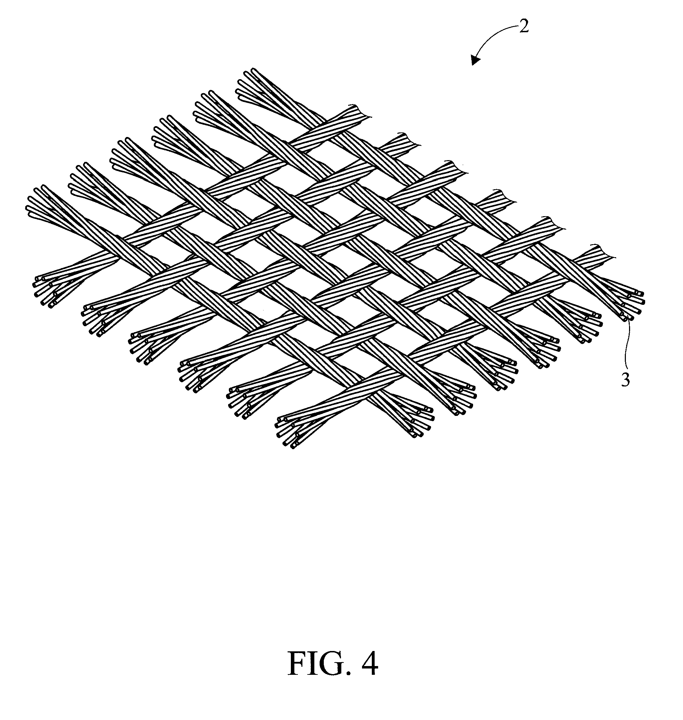

**FIG. 3** is a schematic view of only a single finger cover **120** according to the first embodiment of the present invention. Because the finger cover **120** is separable from the body **110,** the user may also wear only the finger cover **120** on a finger thereof to operate the touch panel without the use of the body **110.** Furthermore, as may be readily known by those of ordinary skill in the art, the aforesaid conductive yarn **2** may also be used only in a fingertip portion **121a** of the finger cover **120** to achieve the purpose of operating the touch panel. Next, in reference to **FIG. 4****,** one strand of the conductive yarn **2** in the glove **100** and the glove **400** of the present invention is woven of a conductive material **3** so that the glove **100** and the glove **400** of the present invention can be electrostatically coupled with the capacitive touch panel. However, it can be readily appreciated by those of ordinary skill in the art that the present invention is not limited thereto, and it is also possible that more or all strands of the conductive yarn **2** are woven of the conductive material **3.** Furthermore, the way in which the conductive material **3** is woven into the conductive yarn **2** may be at least either a plain weave, knitting, tatting, needle punching or combinations thereof. The conductive material **3** comprises at least one of the following so that the conductive material **3** can be electrostatically coupled with the capacitive touch panel: silver fibers, stainless steel fibers, carbon fibers, sputtered fibers or combinations thereof Moreover, the finger cover or the glove may also consist of one or more layers of conductive yarns or one or more layers of fabric different from the conductive yarn.

Of course, it can be readily appreciated by those of ordinary skill in the art that the conductive yarn **2** may also be disposed in either the finger pulp portion, the finger back portion of the finger cover or the fingertip portion of the finger pulp portion to reduce the manufacturing cost of the finger cover or glove of the present invention. Furthermore, the number of finger covers in the glove of the present invention may also vary depending on the user's requirements; for example, there may be only three or two finger covers, but the present invention is not merely limited thereto.

According to the above descriptions, selectively weaving the conductive yarn in either the finger pulp portion, the finger back portion, in the finger tip portion, throughout the whole finger covers, or in both the body and the finger covers of the glove can all allow the user wearing the finger cover or the glove of the present invention to operate the capacitive touch panel. This overcomes the shortcoming of the prior art in which it is not possible to give an instruction to the capacitive touch panel when the user wears a conventional finger cover or glove.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

## Claims

1. A glove for operating a capacitive touch panel, comprising:
a body; and
at least one finger cover having a finger pulp portion and a finger back portion opposite
the finger pulp portion, and the at least one finger cover is separably combined with the body;
wherein the at least one finger cover is woven of a conductive yarn, and a user wearing
the glove is able to be coupled with the capacitive touch panel through the at least one finger cover for touch control.

2. A glove according to claim 1, wherein one or more strands of the conductive yarn are woven of a conductive material.

3. A glove according to claim 2, wherein the conductive material comprises at least one of silver fibers, stainless steel fibers, carbon fibers, sputtered fibers and combinations thereof.

4. A glove according to at least one of claims 1 to 3, wherein the weaving method of the conductive yarn comprises at least one of plain weave, knitting, tatting, needle punching and combinations thereof.

5. A glove according to at least one of claims 1 to 4, wherein one of the finger pulp portion and the finger back portion of the at least one finger cover is woven of the conductive yarn.

6. A glove according to at least one of claims 1 to 5, wherein both of the finger pulp portion and the finger back portion of the at least one finger cover are woven of the conductive yarn.

7. A glove according to at least one of claims 1 to 6, wherein the body is woven of the conductive yarn.

8. A glove according to at least one of claims 1 to 7, wherein the body is woven of a fabric different from the conductive yarn.

9. A glove according to at least one of claims 1 to 8, wherein the at least one finger cover is formed integrally with the body.

10. A glove according to at least one of claims 1 to 9, wherein the body and the at least one finger cover consist of one or more layers of conductive yarns.

11. A glove according to at least one of claims 1 to 10, wherein the body and the at least one finger cover consist of one or more fabric layers different from the conductive yarn.

12. A finger cover for operating a capacitive touch panel, the finger cover being adapted to be separately combined with a body to form a glove, the finger cover comprising:
a finger pulp portion;
a finger back portion opposite the finger pulp portion;
wherein a portion of the finger cover is woven of a conductive yarn, and a user is able to be coupled with the capacitive touch panel through the finger cover for touch control.

13. The finger cover as claimed in claim 12, wherein one of the finger pulp portion and the finger back portion is woven of the conductive yarn.

14. The finger cover as claimed in claim 12 or 13, wherein the finger pulp portion further comprises a finger tip portion, the finger tip portion is woven of the conductive yarn.

15. Use of a finger cover as defined in at least one of claims 12 to 14 for a glove for operating a capacitive touch panel or for operating a capacitive tough panel.
